# EUROPEAN PATENT APPLICATION

(11) **EP 4 063 840 A1**
(43) Date of publication of application: **28.09.2022**
(21) Application number: 20890644.6
(22) Date of filing: 20.11.2020
(51) Int. Cl.: G01N 23/20008, G01N 1/28

(54) **METHOD FOR PREPARING CRYSTAL STRUCTURAL ANALYSIS SAMPLE FOR STRUCTURAL ANALYSIS OF NUCLEOPHILIC GROUP-CONTAINING COMPOUNDS BY CRYSTALLINE SPONGE METHOD**

(30) Priority: 21.11.2019 JP 2019210755
(71) Applicant: KIRIN HOLDINGS KABUSHIKI KAISHA, Nakano-ku, Tokyo 164-0001 (JP)
(72) Inventor: TANIGUCHI Yoshimasa, Tokyo 164-0001 (JP); MATSUMOTO Rie, Tokyo 164-0001 (JP)
(74) Representative: Hoffmann Eitle
(86) International application number: PCT/JP2020/043385
(87) International publication number: WO 2021/100853

(57) **Abstract**

An object of the present invention is to provide a method of preparing a sample for crystallographic analysis used for structure determination of a compound having a nucleophilic group based on the crystalline sponge method. The present invention provides a method of preparing a sample for crystallographic analysis used for structure determination of a compound having a nucleophilic group based on the crystalline sponge method, the method including the steps: (A) derivatizing the nucleophilic group of the compound, and (B) soaking the derivatized compound into a crystalline sponge. The method of the invention allows the structure (particularly, absolute configuration) of a compound which is not amenable to structural analysis based on the crystalline sponge method to be quickly and precisely determined by a simple procedure.

## Description

### CROSS-REFERENCE TO RELATED APPLICATIONS

This application enjoys the benefit of priority from the prior Japanese Patent Application No. 2019-210755 (filed on November 21, 2019), the entire disclosure of which is incorporated herein by reference.

### TECHNICAL FIELD

The present invention relates to a method of preparing a sample for crystallographic analysis used for structure determination of a compound having a nucleophilic group based on the crystalline sponge method. The present invention also relates to a method of using the above preparation method for structural determination.

### BACKGROUND ART

Single crystal X-ray structural analysis is known as a technique for precisely determining the molecular structure of a substance, but application of this method has been limited in cases where, for example, a target substance of analysis is a less crystallizable substance. Recently, the "crystalline sponge" method has attracted attention as an innovative technique for structural determination by X-ray crystallography. The crystalline sponge method is very useful for allowing a substance of analysis as a guest to soak into pores of a porous single crystal called crystalline sponge and thereby to be stably placed in the pores extending regularly in three dimensions, which facilitates determination of the structure of the target substance by X-ray crystallography while the process of crystallization being bypassed (Patent Document 1).

However, some target substances of analysis are hard to soak into a crystalline sponge because of their properties, and disadvantageously this has caused a problem with a limited number of substances that can be analyzed by the crystalline sponge method. Although some progress has been made towards resolution of the problem by improving a crystalline sponge used, there still remains a room for improvement in the range of substances that can be analyzed (Non-Patent Document 1).

### REFERENCE LIST

### [PATENT DOCUMENT]

Patent Document 1: JP 5969616 B

### [NON-PATENT DOCUMENT]

Non-Patent Document 1: F. Sakurai et al., Chem. Eur. J. 2017, 23, 15035-15040.

### SUMMARY OF THE INVENTION

An object of the present invention is to provide a new method of preparing a sample for crystallographic analysis used for structure determination of a compound having a nucleophilic group based on the crystalline sponge method.

The inventors intensely studied a technique for preparing a sample for crystallographic analysis and have found that a sample for crystallographic analysis can be prepared from a nucleophilic compound, among compounds which are not amenable to structural analysis based on the crystalline sponge method, by derivatizing the nucleophilic group of the nucleophilic compound and soaking the derivatized compound into a crystalline sponge. The inventors have also found that the step of derivatization and the step of soaking in a crystalline sponge can be performed simultaneously. The present invention is based on the above findings.

The present invention provides the following inventions.
[1] A method of preparing a sample for crystallographic analysis used for structure determination of a compound having a nucleophilic group based on the crystalline sponge method, the method of comprising the steps of : (A) derivatizing the nucleophilic group of the compound, and (B) soaking the derivatized compound into a crystalline sponge.
[2] The method according to [1], wherein the step (A) and the step (B) are performed sequentially or simultaneously.
[3] The method according to [1] or [2], wherein the derivatization of the nucleophilic group in the step (A) is performed by reacting the nucleophilic group of the compound with a substrate for nucleophilic reaction.
[4] The method according to [3], wherein the reaction is a nucleophilic addition reaction or a nucleophilic substitution reaction.
[5] A method of determining the structure of a target compound of analysis, the method comprising the steps of: performing the preparation method according to any of [1] to [4] to prepare a sample for crystallographic analysis; and performing structural analysis of the prepared sample for crystallographic analysis.

Advantageously, the methods of the invention allow the structure (particularly, absolute configuration) of a compound which is not amenable to structural analysis based on the crystalline sponge method to be quickly and precisely determined by a simple procedure.

### BRIEF DESCRIPTION OF THE DRAWINGS

FIG. 1 shows a result (in the asymmetric unit; solvent molecules are omitted) from crystallographic analysis of (1*R*,2*R*)-2-(cyclopropylamino)cyclohexanol, a target compound of analysis, based on the CS method.
FIG. 2 shows a result (in the asymmetric unit; solvent molecules are omitted) from crystallographic analysis of a sample for crystallography based on the CS method, wherein the sample is prepared by chemical reaction between (1*R*,2*R*)-2-(cyclopropylamino)cyclohexanol, a target compound of analysis, and ethyl isocyanate.
FIG. 3 shows an enlarged view of a part of the crystal structure (a portion corresponding to a urea derivative) enclosed by a dotted line in FIG. 2.
FIG. 4 shows a result (in the asymmetric unit; solvent molecules are omitted) from crystallographic analysis of a sample for crystallography based on the CS method, wherein the sample is prepared by chemical reaction between 2-phenylethylamine, a target compound of analysis, and ethyl isocyanate.
FIG. 5 shows an enlarged view of a part of the crystal structure (a portion corresponding to a urea derivative) enclosed by a dotted line in FIG. 4.
FIG. 6 shows a result (in the asymmetric unit; solvent molecules are omitted) from crystallographic analysis of a sample for crystallography based on the CS method, wherein the sample is prepared by chemical reaction between *rac*-*trans*-2-(phenethylamino)cyclohexan-1-ol, a target compound of analysis, and ethyl isothiocyanate.
FIG. 7 shows an enlarged view of a part of the crystal structure (a portion corresponding to thiourea derivative) enclosed by a dotted line in FIG. 6.
FIG. 8 shows a result (chromatogram) from analyzing *rac*-*trans*-2-(phenethylamino)cyclohexan-1-ol by HPLC.
FIG. 9 shows a result (in the asymmetric unit; solvent molecules are omitted) from crystallographic analysis of a sample for crystallography based on the CS method, wherein the sample is prepared by chemical reaction between a compound corresponding to Peak 1 in FIG. 8, a target compound of analysis, and ethyl isocyanate.
FIG. 10 shows an enlarged view of a part of the crystal structure (a portion corresponding to a urea derivative) enclosed by a dotted line in FIG. 9.
FIG. 11 shows a result (in the asymmetric unit; solvent molecules are omitted) from crystallographic analysis of a sample for crystallography based on the CS method, wherein the sample is prepared by chemical reaction between a compound corresponding to Peak 2 in FIG. 8, a target compound of analysis, and ethyl isocyanate.
FIG. 12 shows an enlarged view of a part of the crystal structure (a portion corresponding to a urea derivative) enclosed by a dotted line in FIG. 11.

### DETAIL DESCRIPTION OF THE INVENTION

A target compound of analysis by the method of the invention is a compound having a nucleophilic group, preferably an organic compound having a nucleophilic group. The nucleophilic group refers to a functional group that functions as an electron donor or a proton (H⁺) acceptor, and examples of the nucleophilic group include amino, hydroxyl, and sulfanyl groups. In this respect, the amino group shall be used to mean not only -NH₂, -N(-H)(-R¹), and -N(-R¹)(-R²) (R¹ and R² both mean any group other than hydrogen) but also -N(-H)- and -N(-R³)- (R³ means any group other than hydrogen). Moreover, examples of the compound having a nucleophilic group include nitrogen-containing compounds (for example, nitrogen-containing aromatic compounds, nitrogen-containing aliphatic compounds, and the like), such as primary amines, secondary amines, tertiary amines, guanidine, amidine, pyridine, and pyrrole, and alcohols, phenols, and thiols.

As the target compound of analysis, a compound which is not amenable to structural analysis based on the crystalline sponge method because of the influence of nucleophilicity of the compound (for example, destruction of a crystalline sponge) is preferred, but is not limiting, and a compound which is not amenable to structural analysis based on the crystalline sponge method because of the influence of molecular structure or molecular size of the compound (for example, incompatible interaction with the framework of a crystalline sponge) is also to be analyzed. In other words, the target compound of analysis by the method of the invention can be a compound that interacts with the framework of a crystalline sponge so weakly that the compound is not regularly held in pores, or on the contrary, so strongly that the compound is only allowed to move in a limited space near the entrance of pores and is unevenly distributed inside the pores, which causes a difficulty in analysis of the compound, among nucleophilic compounds.

The target compound of analysis by the method of the invention can contain one or more nucleophilic groups and may also contain other functional groups in addition to the nucleophilic groups. In cases where the target compound of analysis contains multiple nucleophilic groups, a part of or all the nucleophilic groups can be derivatized by a reaction with a substrate for nucleophilic reaction.

This invention is a method of preparing a sample for crystallographic analysis used for structure determination based on the crystalline sponge method, wherein the method comprises the steps of: (A) derivatizing a nucleophilic group in a nucleophilic compound as a target of analysis, and (B) soaking the derivatized compound as a target of analysis into a crystalline sponge.

In the step (A), a nucleophilic group in the compound can be derivatized by a reaction with a compound that is reactive to the nucleophilic group (that is, a substrate for nucleophilic reaction).

The reaction between the substrate for nucleophilic reaction and the nucleophilic group is not specifically limited as long as the compound having a nucleophilic group is derivatized by introducing any other substituent into the position of the nucleophilic group. Typical examples of the reaction include nucleophilic addition reaction and nucleophilic substitution reaction. Conditions for nucleophilic addition reaction and those for nucleophilic substitution reaction are well-known, and those skilled in the art can appropriately determine the conditions for these reactions depending on a target compound of analysis and on a substrate for nucleophilic reaction.

Examples of a substrate for nucleophilic reaction available for the nucleophilic addition reaction include isocyanates (R-N=C=O), isothiocyanates (R-N=C=S), imines (R-C(=NR")-R'), and nitriles (R-C=N) (in this respect, R, R' and R" represent any groups which may be same or different (for example, hydrogen atom or an alkyl group with 1 to 6 carbon atoms). In addition, examples of a substrate for nucleophilic reaction available for the nucleophilic substitution reaction include acyl halides (R-C(=O)(-Hal)), acid anhydrides (R-C(=O)-O-C(=O)-R'), esters (R-C(=O)-OR'), amides (R-C(=O)-N(-R') (-R")), and halides (in this respect, R, R' and R" represent any groups which may be same or different (for example, hydrogen atom or an alkyl group with 1 to 6 carbon atoms), and Hal represents a halogen atom (for example, chlorine, fluorine, iodine, bromine)).

The substrate for nucleophilic reaction can be arbitrarily selected from substrates that are reactive to the nucleophilic group, and can be selected such that the derivatized compound as a target of analysis is small enough in size to pass through the pores of a crystalline sponge (standard pore size: 10 Å × 10 Å). Moreover, the substrate for nucleophilic reaction can also be selected considering the interaction (for example, π-π bond, CH-π bond, hydrogen bond, halogen-π bond, or the like) with a polymer metal complex used in the framework structure of a crystalline sponge.

A solvent system in which the target compound of analysis is derivatized is not specifically limited as long as the derivatization reaction is allowed to proceed in the solvent system. However, in cases where the step (A) and the step (B) are performed sequentially or simultaneously as described below, the solvent can be selected considering the step of soaking in a crystalline sponge (Step B). In other words, when a solvent is selected for derivatization of a target compound of analysis, it is desirable to consider the potential of the solvent to damage or dissolve a crystalline sponge depending on the combination of the type of the crystalline sponge used and the composition of the solvent in which the crystalline sponge is soaked because such damage to or dissolution of a crystalline sponge may compromise the function of the crystalline sponge in the crystalline sponge method. Examples of a solvent used for performing the step (A) and the step (B) simultaneously or sequentially in the method of the invention include aliphatic hydrocarbons (for example, *n*-hexane, pentane, heptane, octane, nonane, decane, cyclopentane, cyclohexane, and the like), aromatic hydrocarbons (for example, benzene, toluene, xylene, and the like), halogenated hydrocarbons (for example, chloroform, dichloromethane, chloromethane, dichloroethane, chloroethane, and the like), ethers (for example, diethyl ether, dimethyl ether, methyl tert-butyl ether, tetrahydrofuran, and the like), esters (for example, methyl acetate, ethyl acetate, methyl formate, ethyl formate, and the like), and ketones (for example, acetone, methyl ethyl ketone, pentanone, and the like).

In the step (B), the derivatized target compound in the step (A) is soaked into a crystalline sponge to prepare a sample for crystallographic analysis. In this respect, the crystalline sponge is a single crystal material with three-dimensionally regular porous structures and can be made, for example, from metal-organic frameworks (MOFs), covalent organic frameworks (COFs), inorganic compounds, such as zeolites, or the like. However, the source of the single crystal material is not limited, provided that a compound is incorporated as a guest into pores of the single crystal material. An example of the crystalline sponge composed of a metal-organic framework is a polymer metal complex with a three-dimensional network structure, which is composed of a ligand with two or more coordination sites and a metal ion as a coordination center. The "three-dimensional network structure" as used herein refers to a network structure composed of repeating structural units, extending in three dimensions, each unit formed by a ligand (a ligand with two or more coordination sites or any of other monodentate ligands) and a metal ion bound thereto.

A single crystal metal-organic framework that can be used as a crystalline sponge is described in the following literature: for example, Nature 2013, 495, 461-466; Chem. Commun. 2015, 51, 11252-11255; Science 2016, 353, 808-811; Chem. Commun. 2016, 52, 7013-7015; Chem. Asian J. 2017, 12, 208-211; J. Am. Chem. Soc. 2017, 139, 11341-11344; and JP 5969616 B. A [(ZnX₂)₃(tpt)₂·(solvent)ₐ]ₙ-type crystalline sponge (wherein X represents a halogen atom such as chlorine, bromine, iodine, or fluorine, and "tpt" represents 2,4,6-tri(4-pyridyl)-1,3,5-triazine, and "solvent" represents a solvent confined in pores and other structures, and "a" represents a number of not less than 0, and "n" represents a positive integer; the same applies below) described, for example, in Nature 2013, 495, 461-466 and Chem. Commun. 2015, 51, 11252-11255 is preferred, and a [(ZnCl₂)₃(tpt)₂·(solvent)ₐ]ₙ-type crystalline sponge is more preferred, in consideration of convenience for single crystal preparation.

For the production of a sample for crystallographic analysis, the method for soaking the derivatized target compound into a crystalline sponge for incorporation of the target compound as a guest into pores is not specifically limited, as long as the method allows the target compound to be incorporated as a guest into pores. For example, the target compound can be incorporated as a guest into pores by a method described in the following literature: for example, IUCrJ 2016, 3, 139-151; Chem. Eur. J. 2017, 23, 15035-15040; CrystEngComm, 2017, 19, 4528-4534; Org. Lett. 2018, 20, 3536-3540; Science 2016, 353, 808-811; and Chem. Commun. 2015, 51, 11252-11255. For example, the target compound can be incorporated into cavities in the three-dimensional network structure of a crystalline sponge by soaking the compound into the crystalline sponge at a temperature of 0 to 120°C for a period of 0.5 hours to 14 days.

In the method of the invention, the step (A) and the step (B) can be performed sequentially or simultaneously. In cases where the step (A) and the step (B) are performed simultaneously, a target compound of analysis can be derivatized simultaneously with being soaked into a crystalline sponge, which eliminates the necessity of an essential purification step in standard organic synthesis reactions (for example, liquid-liquid partition extraction, column chromatography, and the like). Extremely advantageously, this can reduce the working time or the required amount of a target compound of analysis for use in derivatization.

Another aspect of the present invention provides a method of determining the structure of a target compound of analysis, wherein the method comprises a step of performing structural analysis of the sample for crystallography obtained by performing the method of the invention for preparation of a sample for crystallography. Any technique selected from X-ray diffraction, neutron diffraction, and electron diffraction may be used for the structural analysis of the sample for crystallography. Additionally, the measurement data, or the structure of the target compound of analysis, can be analyzed by a known method, such as a method described in WO 2014/038220 or in IUCrJ 2016, 3, 139-151.

Advantageously, the method of the invention allows for the structural analysis of a target compound of analysis even if the compound is not amenable to crystallographic analysis based on the crystalline sponge method due to the properties of the compound in the unmodified state. In addition, it is another advantage that the method of the invention allows for simultaneous performance of the derivatization of a target compound of analysis and the soaking in a crystalline sponge, which enables quick analysis by a simple procedure.

### EXAMPLES

The present invention will be specifically described in more detail by examples below, but the present invention is not limited to those examples.

### (Crystalline Sponge)

A [(ZnCl₂)₃(tpt)₂·(*n*-hexane)ₐ]ₙ-type crystalline sponge produced according to the method described in Non-Patent Document 1 was used in the examples.

### (Single Crystal X-Ray Structural Analysis)

In the examples, single crystal X-ray structural analysis was performed using a single crystal X-ray diffractometer Synergy-R (Rigaku Corporation). The data was acquired using a radiation source of Cu Kα (λ = 1.5418 Å) at a measurement temperature of 100 K. The diffraction data was analyzed according to the method described in Non-Patent Document 1.

### Example 1: X-Ray Structural Analysis Based on the Crystalline Sponge Method

In Example 1, the crystalline sponge method was evaluated for applicability to crystallographic analysis of compounds having a nucleophilic group.

### (1) Target Compounds of analysis

Target compounds of analysis in Example 1 are as shown in Table 1.

**Table 1: Target compounds of analysis**

| | |
|---|---|
| Comparative Example 1 | (1*R*,2*R*)-2-(cyclopropylamino)cyclohexanol (^{∗}) |
| Comparative Example 2 | (1*R*,2*R*)-2-(cyclopropylamino)cyclohexanol (^{∗}) |
| Comparative Example 3 | 2-phenylethylamine (Tokyo Chemical Industry Co., Ltd.) |
| Comparative Example 4 | *rac*-*trans*-2-(phenethylamino)cyclohexan-1-ol (^{∗∗}) |

| | |
|---|---|
| ^{∗}: produced by a known method (Bull. Chem. Soc. Jpn. 2018, 91, 678-683). ^{∗∗}: produced by a known method (WO 2015/194508). | |

### (2) Experimental Procedure

### A. Comparative Examples 1, 3, and 4

In Comparative Examples 1, 3, and 4, one granule of the crystalline sponge and *n*-hexane (45 µL) were added together to a 1.2-mL V-bottom vial. A target compound of analysis was dissolved in dimethoxyethane to a concentration of 1 mg/mL, and 5 µL of the resulting solution (equivalent to 5 µg of the target compound of analysis) was added to the above vial containing the crystalline sponge. The vial was capped and sealed and then incubated at 50°C for 1 day. One day later, the crystalline sponge was recovered from the solution, coated with an inert oil layer, and then analyzed with a single crystal X-ray diffractometer.

### B. Comparative Example 2

In Comparative Example 2, one granule of the crystalline sponge and *n-*hexane (45 µL) were added together to a 1.2-mL V-bottom vial. A target compound of analysis was dissolved in dimethoxyethane to a concentration of 1 mg/mL, and 1 µL of the resulting solution (equivalent to 1 µg of the target compound of analysis) was added to the above vial containing the crystalline sponge. The vial was capped and sealed, and the cap was pierced with an injection needle, and the vial was incubated at 4°C for 5 days to gently evaporate the solvent. Five days later, the crystalline sponge was recovered from the vial, coated with an inert oil layer, and then analyzed with a single crystal X-ray diffractometer.

### (3) Results

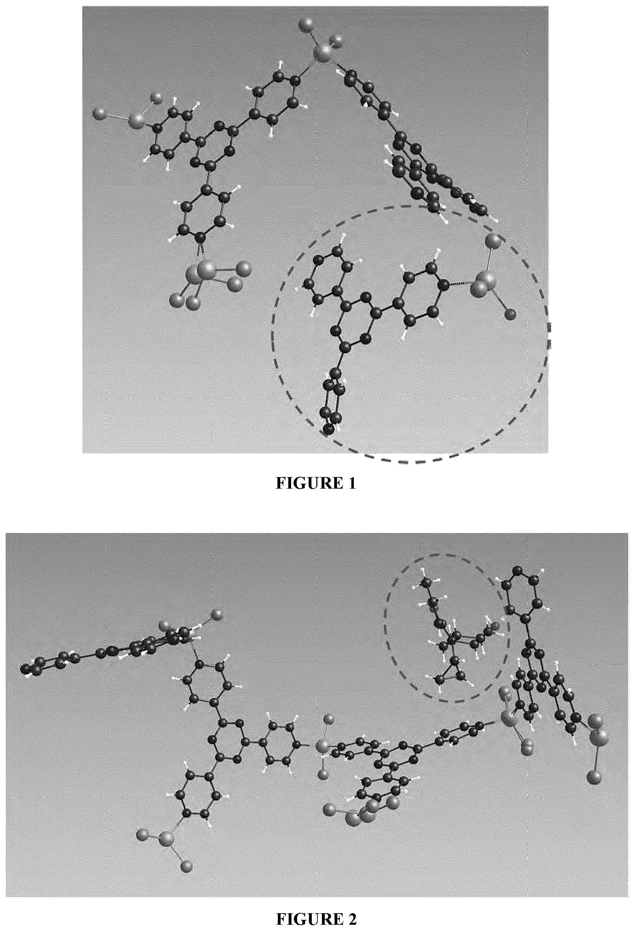

The result from the X-ray crystallographic analysis of the target compound analyzed in Comparative Example 1 was as shown in FIG. 1, which indicated failure in observing the crystal structure of the target compound of analysis. In Comparative Example 1, degradation products from the framework of the crystalline sponge were observed to be incorporated as a guest, as shown in a region enclosed by a dotted line in FIG. 1. Additionally, the results from the X-ray crystallographic analysis of the target compounds analyzed in Comparative Example 2 (the temperature and time conditions employed in Comparative Example 1 for soaking in a crystalline sponge were changed to milder conditions as described in Non-Patent Document 1) and Comparative Examples 3 and 4 were similar to that in Comparative Example 1, which indicated failure in observing the crystal structures of the target compounds of analysis (data not shown). Without being bound by the following theory, it was understood that these resulted from destruction of the crystalline sponge-constituting framework due to the reactivity (nucleophilicity, coordinating property, and the like) of the target compounds of analysis.

In Non-Patent Document 1, the [(ZnCl₂)₃(tpt)_{2·}(*n*-hexane)ₐ]ₙ-type crystalline sponge is described to be suitable for analysis of nitrogen-containing compounds, but the results of Comparative Examples 1 to 4 indicated that there are practically many examples of compounds that are not amenable to analysis of crystal structure based on the crystalline sponge method due to the reactivity (nucleophilicity, coordinating property, and the like) of the target compounds of analysis.

### Example 2: X-Ray Structural Analysis Based on Derivatization of Target Compounds of Analysis

In Example 2, the target compounds of analysis in Example 1 were derivatized, and the crystalline sponge method was evaluated for applicability to crystallographic analysis of the resulting compounds.

### (1) Target Compounds of analysis and Compounds for Derivatization

Target compounds of analysis and compounds for derivatization in Example 2 are as shown in Table 2.

**Table 2: Target compounds of analysis and compounds for derivatization**

| | Target compound of analysis | Compound for derivatization | Derivative | Crystallographic data | Crystal structure | Crystal structure (enlarged view) |
|---|---|---|---|---|---|---|
| Practical Example 1 | (1*R*,2*R*)-2-(cyclopropylamino)cyclohexanol 1 mg/mL [the concentration at the time of mixing and dissolving] 5 µg [the amount at the time of soaking in crystalline sponge] | ethyl isocyanate 3 mg/mL [the concentration at the time of mixing and dissolving] 15 µg [the amount at the time of soaking in crystalline sponge] | urea derivative | Table 3 | FIG. 2 | FIG. 3 |
| Practical Example 2 | 2-phenylethylamine 1 mg/mL [the concentration at the time of mixing and dissolving] 5 µg [the amount at the time of soaking in crystalline sponge] | ethyl isocyanate 3 mg/mL [the concentration at the time of mixing and dissolving] 15 µg [the amount at the time of soaking in crystalline sponge] | urea derivative | Table 4 | FIG. 4 | FIG. 5 |
| Practical Example 3 | *rac-trans-2-*(phenethylamino)cyclohexan-1-ol 1 mg/mL [the concentration at the time of mixing and dissolving] 5 µg [the amount at the time of soaking in crystalline sponge] | ethyl isothiocyanate 2 mg/mL [the concentration at the time of mixing and dissolving] 10 µg [the amount at the time of soaking in crystalline sponge] | thiourea derivative | Table 5 | FIG. 6 | FIG. 7 |

### (2) Experimental Procedure

One granule of the crystalline sponge and *n*-hexane (45 µL) were added together to a 1.2-mL V-bottom vial. A target compound of analysis and ethyl isocyanate (Tokyo Chemical Industry Co., Ltd.) or ethyl isothiocyanate (Tokyo Chemical Industry Co., Ltd.) were both mixed and dissolved in dimethoxyethane to yield the concentrations shown in Table 2, and 5 µL of the resulting solution was added to the above vial containing the crystalline sponge. The vial was capped and sealed, and the septum was pierced with an injection needle, and the vial was incubated at 50°C for 1 day to allow the derivatization reaction to proceed and to gently evaporate the solvent for sample enrichment. One day later, the crystalline sponge was recovered from the vial, coated with an inert oil layer, and then analyzed with a single crystal X-ray diffractometer.

### (3) Results

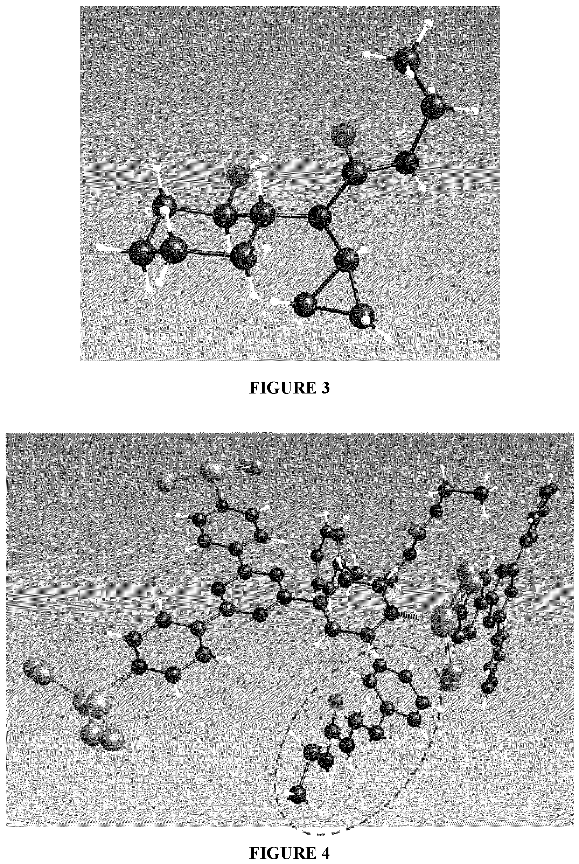

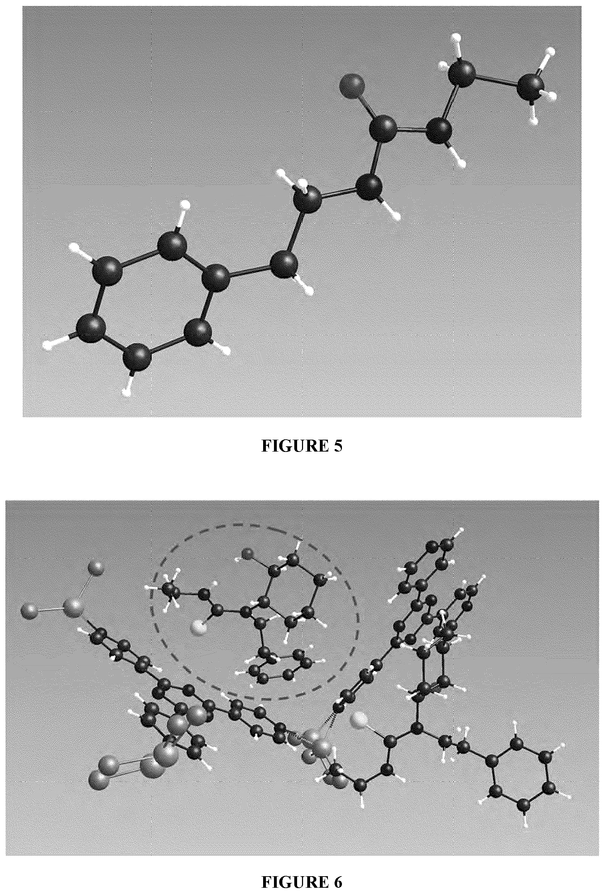

The crystallographic data and X-ray crystal structure of each of the practical examples were as shown in Tables 3 to 5 and in FIGS. 2, 4, and 6 (enlarged views of the crystal structures are shown in FIGS. 3, 5, and 7), respectively. In any of the practical examples, the crystal structures of derivatives produced by chemical reaction between the target compounds of analysis and ethyl isocyanate or ethyl isothiocyanate (Practical Example 1: a urea derivative, Practical Example 2: a urea derivative, Practical Example 3: a thiourea derivative) were observed, as well as the crystal structure of the framework of the crystalline sponge. The amino group of (1*R*,2*R*)-2-(cyclopropylamino)cyclohexanol in Practical Example 1, the amino group of 2-phenylethylamine in Practical Example 2, and the amino group of *rac-trans-2-*(phenethylamino)cyclohexan-1-ol in Practical Example 3 were converted to a urea group, a urea group, and a thiourea group, respectively, which suggested that these conversions masked the nucleophilicity of the compounds and prevented the framework of the crystalline sponge from degradation and allowed for crystallographic observation of derivatives of the target compounds of analysis.

**Table 3: Crystallographic Data (Practical Example 1)**

| Crystal system | Monoclinic |
|---|---|
| a (Å) | 33.04206(16) |
| b (Å) | 14.45235(5) |
| c (Å) | 31.47739(15) |
| β (°) | 101.2236(4) |
| V (Å³) | 14744.04(10) |
| Z | 4 |
| Space group | C2 |
| Rint | 0.0206 |
| R₁ | 0.0834 |
| wR₂ | 0.2819 |
| GoF | 1.065 |
| Flack parameter (Parsons) | 0.258(26) |

**Table 4: Crystallographic Data (Practical Example 2)**

| Crystal system | Monoclinic |
|---|---|
| a (Å) | 33.0552(8) |
| b (Å) | 14.3864(2) |
| c (Å) | 32.6357(5) |
| β (°) | 103.077(2) |
| V (Å³) | 15117.3(5) |
| Z | 8 |

| Space group | C2/c |
|---|---|
| Rint | 0.0256 |
| R₁ | 0.0991 |
| wR₂ | 0.3114 |
| GoF | 1.079 |

**Table 5: Crystallographic Data (Practical Example 3)**

| Crystal system | Monoclinic |
|---|---|
| a (Å) | 33.1140(4) |
| b (Å) | 14.3963(1) |
| c (Å) | 32.1702(3) |
| β (°) | 102.407(1) |
| V (Å³) | 14978.0(3) |
| Z | 8 |

| Space group | C2/c |
|---|---|
| Rint | 0.0214 |
| R₁ | 0.0912 |
| wR₂ | 0.2967 |
| GoF | 1.105 |

### Example 3: Structure Determination of Enantiomers [Optical Resolution of Enantiomers (Practical Example 4) and Structural Analysis of Enantiomers (Practical Examples 5 and 6)]

In Example 3, enantiomers of a target compound of analysis were derivatized, and the crystalline sponge method was evaluated for applicability to crystallographic analysis of the enantiomers.

### (1) Method

### A. Optical Resolution

*Rac*-*trans*-2-(phenethylamino)cyclohexan-1-ol was optically resolved into a pair of enantiomers under the conditions shown in Table 6.

**Table 6: HPLC conditions**

| Column | CHIRALPAK AD-H (4.6 mm × 250 mm, particle size: 5 µm) |
|---|---|
| Column temperature | 35°C |
| Mobile phase | *n*-hexane/isopropanol/diethylamine 95/5/0.1 (v/v/v) |
| Flow rate | 1.2 mL/min |
| Detection | UV 254 nm |
| Injection volume | 10 µL |
| Sample concentration | 20 mg/mL |
| Analysis time | 12 minutes |

### B. Structure Determination

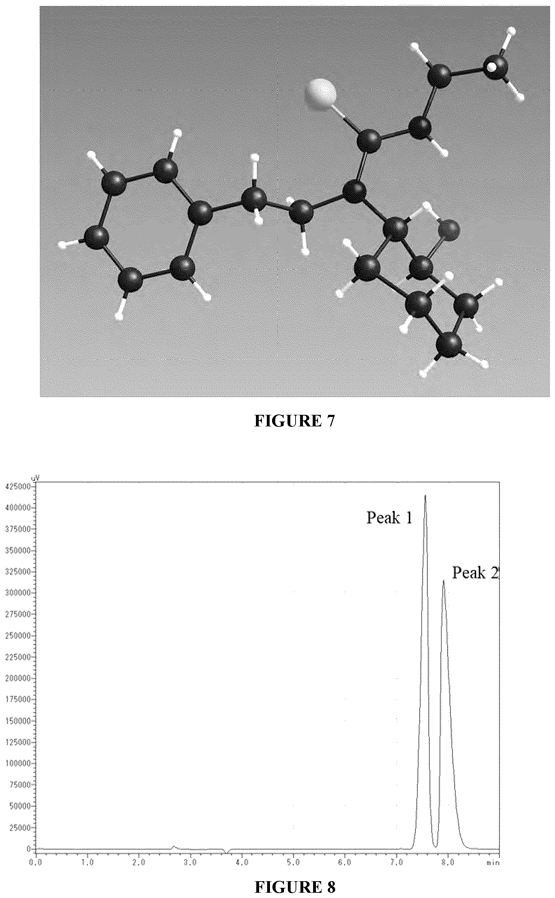

One granule of the crystalline sponge and *n*-hexane (45 µL) were added together to a 1.2-mL V-bottom vial. A compound corresponding to the early peak (Peak 1) in FIG. 8 and ethyl isocyanate were both mixed and dissolved in dimethoxyethane to concentrations of 1 mg/mL and 1.5 mg/mL, respectively, and 5 µL of the resulting solution (equivalent to 5 µg of the compound of Peak 1 and 7.5 µg of ethyl isocyanate) was immediately added to the above vial containing the crystalline sponge. The vial was capped and sealed, and the septum was pierced with an injection needle, and the vial was incubated at 50°C for 1 day to allow the derivatization reaction to proceed and to gently evaporate the solvent for sample enrichment. One day later, the crystalline sponge was recovered from the vial, coated with an inert oil layer, and then analyzed with a single crystal X-ray diffractometer. A compound corresponding to the later peak (Peak 2) in FIG. 8 was analyzed under the same conditions as those for the compound of Peak 1.

### (2) Result

The result of the optical resolution was as shown in the chromatogram of FIG. 8.

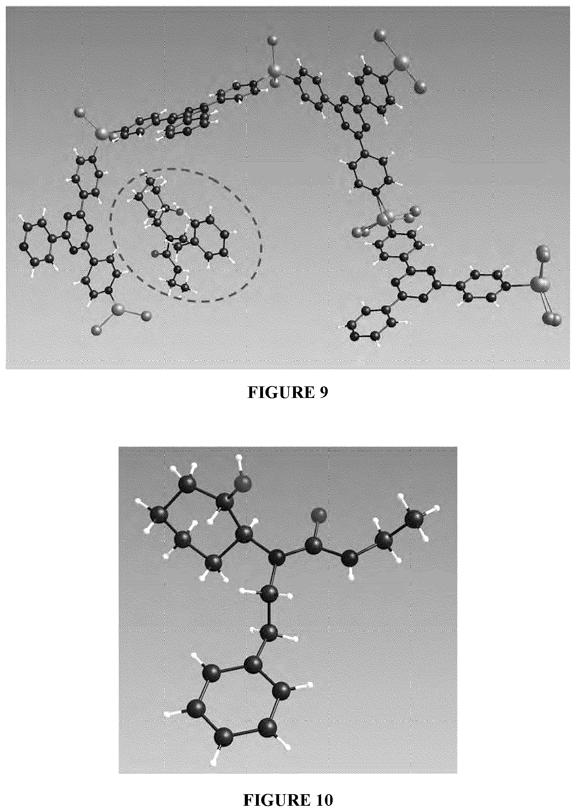

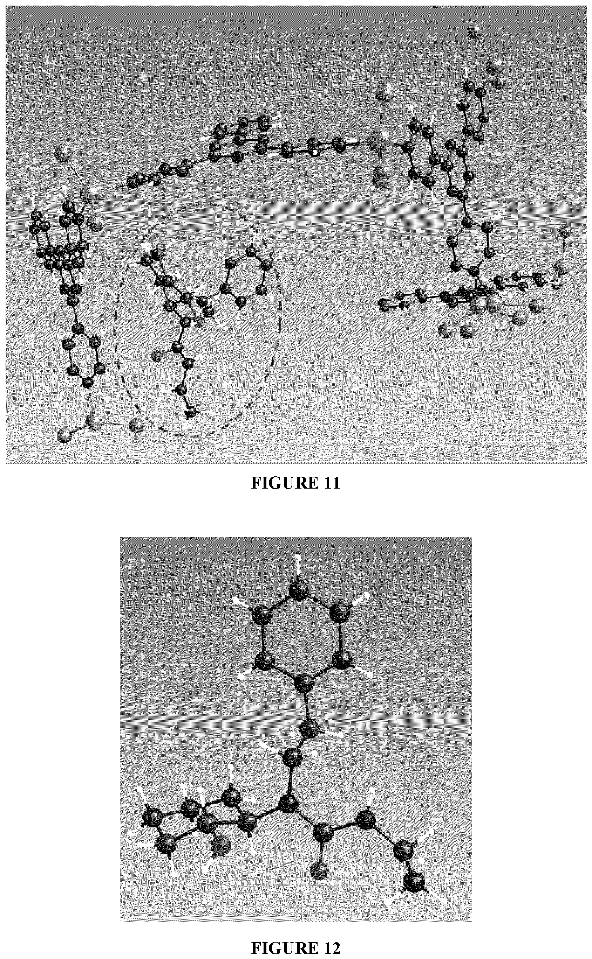

The crystallographic data and X-ray crystal structures of the compounds of Peak 1 and Peak 2 were as shown in Tables 7 and 8 and in FIGS. 9 and 11 (enlarged views of the crystal structures are shown in FIGS. 10 and 12), respectively. A urea derivative produced by chemical reaction between the compound of Peak 1 and ethyl isocyanate was observed together with the framework of the crystalline sponge in Practical Example 5, whereas a urea derivative produced by chemical reaction between the compound of Peak 2 and ethyl isocyanate was observed together with the framework of the crystalline sponge in Practical Example 6. The amino group in the compounds of Peak 1 and Peak 2 was converted to a urea group, and these conversions were conceived to prevent the framework of the crystalline sponge from degradation and to allow for crystallographic observation of urea derivatives of the target compound of analysis, which correspond to the compound of Peak 1 and the compound of Peak 2.

From the analysis result, the underivatized compounds of Peak 1 and Peak 2 were determined to have the structures of (1*S*,2*S*)-(phenethylamino)cyclohexan-1-ol and (1*R*,2*R*)-(phenethylamino)cyclohexan-1-ol, respectively.

**Table 7: Crystallographic Data (Practical Example 5)**

| Crystal system | Monoclinic |
|---|---|
| a (Å) | 33.53976(18) |
| b (Å) | 14.42480(5) |
| c (Å) | 31.41664(18) |
| β (°) | 102.1333(5) |
| V (Å³) | 14859.98(18) |
| Z | 4 |

| Space group | C2 |
|---|---|
| Rint | 0.0211 |
| R₁ | 0.0707 |
| wR₂ | 0.2286 |
| GoF | 1.076 |
| Flack parameter (Parsons) | 0.088(26) |

**Table 8: Crystallographic Data (Practical Example 6)**

| Crystal system | Monoclinic |
|---|---|
| a (Å) | 33.5314(2) |
| b (Å) | 14.42771(7) |
| c (Å) | 31.71437(19) |
| β (°) | 102.4093(7) |
| V (Å³) | 14984.39(16) |
| Z | 4 |

| Space group | C2 |
|---|---|
| Rint | 0.0190 |
| R₁ | 0.0651 |
| wR₂ | 0.2147 |
| GoF | 1.094 |
| Flack parameter (Parsons) | 0.117(6) |

## Claims

1. A method of preparing a sample for crystallographic analysis used for structure determination of a compound having a nucleophilic group based on the crystalline sponge method, the method of comprising the steps: (A) derivatizing the nucleophilic group of the compound, and (B) soaking the derivatized compound into a crystalline sponge.

2. The method according to claim 1, wherein the step (A) and the step (B) are performed sequentially or simultaneously.

3. The method according to claim 1 or 2, wherein the derivatization of the nucleophilic group in the step (A) is performed by reacting the nucleophilic group of the compound with a substrate for nucleophilic reaction.

4. The method according to claim 3, wherein the reaction is a nucleophilic addition reaction or a nucleophilic substitution reaction.

5. A method of determining the structure of a target compound of analysis, the method comprising the steps of: performing the preparation method according to any one of claims 1 to 4 to prepare a sample for crystallographic analysis; and performing structural analysis of the prepared sample for crystallographic analysis.
